Europäisches Patentamt

(19) European Patent Office

Office européen des brevets

(11) Numéro de publication : **0 304 654 B1**

(12) **FASCICULE DE BREVET EUROPEEN**

(45) Date de publication du fascicule du brevet :
21.08.91 Bulletin 91/34

(51) Int. Cl.⁵ : **B23K 9/04, B23P 6/04**

(21) Numéro de dépôt : **88112115.6**

(22) Date de dépôt : **27.07.88**

(54) **Procédé de soudage d'une gorge usinée dans une pièce massive en acier et utilisation de ce procédé pour réparer un rotor fissuré.**

(30) Priorité : **28.07.87 FR 8710689**

(43) Date de publication de la demande :
**01.03.89 Bulletin 89/09**

(45) Mention de la délivrance du brevet :
**21.08.91 Bulletin 91/34**

(84) Etats contractants désignés :
**AT BE CH DE ES FR GB GR IT LI LU NL SE**

(56) Documents cités :
**FR-A- 2 292 107**
**US-A- 3 745 322**

(56) Documents cités :
**WELDING PRODUCTION, vol. 33, no. 10, octobre 1986, pages 13-15, Abington, Cambridge,
GB; A.E. ANOKHOV et al.: "A new method of
repair welding cast components of chro-
mium-molybdenum-vanadium steels without
heat treatment"**
**PATENT ABSTRACTS OF JAPAN, vol. 7, no.
217 (M-245)[1362], 27 septembre 1983, page 89
M 245; & JP-A-58 112 655 (NIPPON SEIKOSHO
K.K.) 05-07-1983**

(73) Titulaire : **GEC ALSTHOM SA**
**38, avenue Kléber**
**F-75116 Paris (FR)**

(72) Inventeur : **Allain, Gilles**
**3, rue Guyton de Morveau**
**F-75013 Paris (FR)**
Inventeur : **Nougaret, Max**
**52, avenue du Général Galliéni Bât. A**
**F-93380 Pierrefitte (DE)**

(74) Mandataire : **Weinmiller, Jürgen et al**
**Lennéstrasse 9 Postfach 24**
**W-8133 Feldafing (DE)**

## Description

La présente invention a trait à un procédé de soudage d'une gorge usinée dans une pièce massive en acier.

Un tel procédé est utilisable notamment pour réparer une pièce fissurée en particulier un rotor.

Il a été proposé pour réparer un rotor fissuré de couper le rotor au voisinage de la fissure puis de faire disparaître la partie fissurée et de remplacer cette partie par une pièce de remplacement qui est soudée aux deux parties du rotor. Mais cette méthode présente des difficultés en particulier pour aligner avec exactitude les deux parties du rotor.

Pour réparer le rotor les inventeurs ont pensé à usiner une gorge à l'endroit de la fissure pour la faire disparaître, la gorge étant de profondeur constante et faisant le tour du rotor.

Le procédé selon l'invention permettant le soudage d'une gorge usinée dans un rotor massif en acier et plus généralement dans une pièce massive en acier est caractérisé en ce qu'on effectue des passes de fond puis on beurre chaque paroi de la gorge avec des produits d'apport en acier faiblement allié avec teneur élevée en carbone,
on traite thermiquement de façon à faire disparaître les contraintes dans les zones de la pièce voisine des parois de la gorge,
on emplit l'espace libre entre les deux beurrages par des produits d'apport en acier faiblement allié, ladite opération de beurrage de paroi étant réalisée en disposant dans la gorge une plaque en acier au carbone à une certaine distance de ladite paroi, en remplissant l'espace entre la plaque et la paroi de produits d'apport en acier faiblement allié avec teneur élevée en carbone, et en éliminant la plaque d'acier et éventuellement une partie du remplissage pour ne laisser qu'une couche sur la paroi.

De préférence lors des passes de fond on utilise comme métal d'apport un acier non allié à bas carbone.

Grâce au procédé selon l'invention on beurre les deux parois de la gorge avec une couche de matériau facilement soudable sans induire de contraintes dans les parois de la gorge évitant ainsi un risque important de dégradation de la pièce. On peut faire disparaître tout défaut dans une pièce massive en acier en usinant une gorge qui peut-être droite ou circulaire à l'endroit du défaut et en soudant cette gorge selon l'invention.

Le procédé selon l'invention va maintenant être décrit plus en détail, en se référant à un mode de réalisation particulier et d'une variante cités à titre d'exemples non limitatifs et représentés par des dessins annexés.

Les figures 1 à 7 représentent les diverses étapes du procédé de soudage selon l'invention.

La figure 8 représente une plaque utilisable dans le procédé des figures 1 à 7.

La figure 9 représente une variante du procédé des figures 1 à 7.

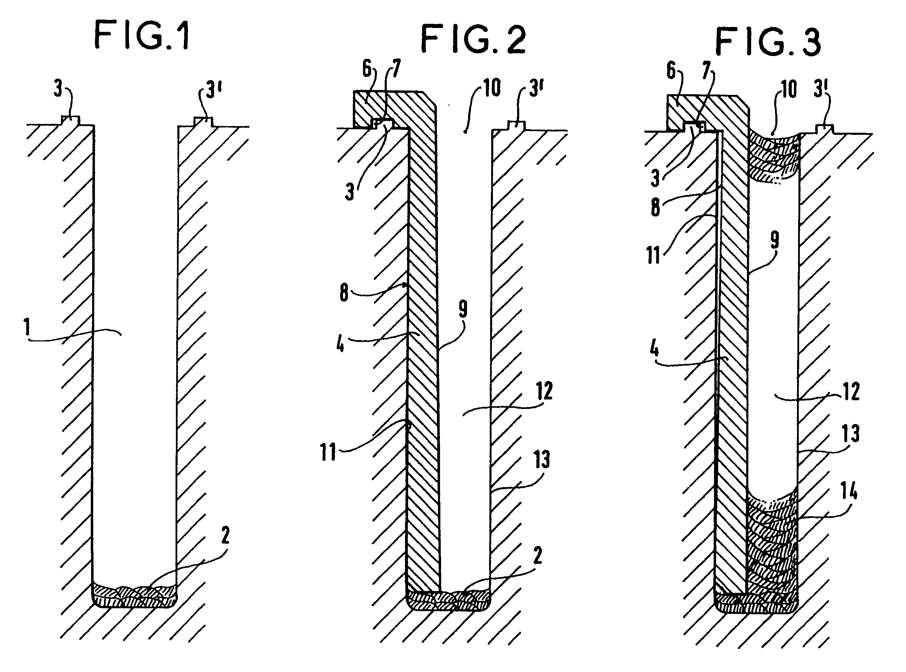

Sur la figure 1 on a représenté en coupe une gorge 1 ménagée dans un rotor en acier massif. Cette gorge est circulaire et a été usinée pour faire disparaître une fissure.

La largeur de la gorge dépend de la dimension longitudinale de la fissure et la profondeur dépend de la dimension transversale de cette fissure.

Ce rotor est en acier allié comportant notamment Cr, Mo, V et de l'ordre de 0,26% de carbone.

Au cas où ce rotor a travaillé à un température critique (par exemple supérieure à 450°C) on le défragilise en le portant à une température supérieure à 600°C, par exemple 650°C pendant un temps suffisant (par exemple vingt à vingt-quatre heures).

On exécute ensuite deux ou trois passes de fond pour déposer deux à trois couches 2 en utilisant comme métal d'apport un acier non allié à bas carbone ( ~ 0,06%C).

Il se produit une dilution du métal de base du rotor dans le métal déposé.

Etant donné que le métal d'apport est non allié, la trempabilité du métal déposé est relativement faible ce qui évite d'une part d'accroître les contraintes résiduelles et permet d'obtenir une structure non sensible à la fissuration à froid ce qui donc diminue les risques globaux de fissuration.

Le rotor est muni de butées 3, 3' qui serviront dans un stade ultérieur.

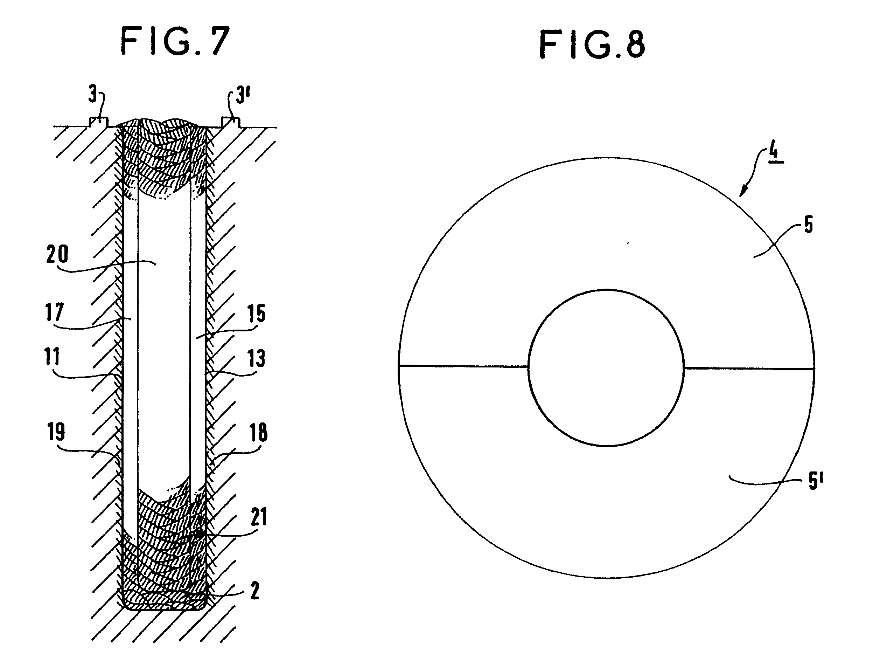

On vient ensuite disposer une plaque 4 en acier dans la gorge 1 (voir figure 2) ; comme la gorge est circulaire, cette plaque 4 est constituée de deux secteurs semi-circulaires 5, 5' (voir figure 8).

La plaque 4 comporte un rebord 6 muni d'une encoche 7 coiffant la butée 3 et plus large que cette butée 3 et une face 8 perpendiculaire au rebord 6.

La seconde face 9 fait un angle de 1 à 2° avec la première face 8 en se rapprochant de cette dernière du fond de la gorge 1 vers son ouverture 10. La face 8 est plaquée contre la paroi 11 de la gorge 1 si bien qu'un espace 12 est défini entre la face inclinée 9 et la seconde paroi 13 de la gorge 1.

La plaque est en acier au carbone faiblement allié ayant une très faible limite élastique ($Re_{0,2}$ = 300 MPa).

On dispose ensuite par soudage des couches 14 dans l'espace 12 en le remplissant jusqu'à l'ouverture 10 (voir figure 3).

A mesure que des couches 14 sont déposées et se solidifient elles se contractent. Il s'ensuit que la plaque 4 pivote autour de sa partie au fond de la gorge et la face 8 décolle de la paroi 11. L'enchoche 7 vient contre la butée 3 en limitant le décollement de la face 8. On a prévu la largeur de l'encoche 7 de façon que la plaque 4 soit bloquée lorsque la face 9 devient parallèle aux parois 11 et 13.

Ce blocage intervient environ lorsque l'espace 12 est rempli à mi-hauteur. Lorsqu'on continue à déposer des couches 14, la plaque 3 se déforme transversalement en suivant la rétractation des couches 14 qui se solidifient. Cette déformation de la plaque 4 est possible en raison de sa très faible limite élastique, le métal d'apport de soudage pour déposer les couches 14 est sous forme de fil faiblement allié (moins de 5%) au Cr, Mo avec teneur élevée en carbone (comprise entre 0,16% et 0,22%). Il est déposé en soudage automatique avec protection sous flux solide ou gazeux. On peut également utiliser un fil spécial ou encore procéder par soudage manuel en utilisant une électrode enrobée.

Dans ces divers cas on choisit le métal d'apport et le flux (dans les soudages sous flux) de façon que les couches 14 solidifiées soient en acier faiblement allié avec teneur en carbone comprise entre 0,08% et 0,12% ce qui réalise un bon compromis entre la soudabilité et les caractéristiques mécaniques.

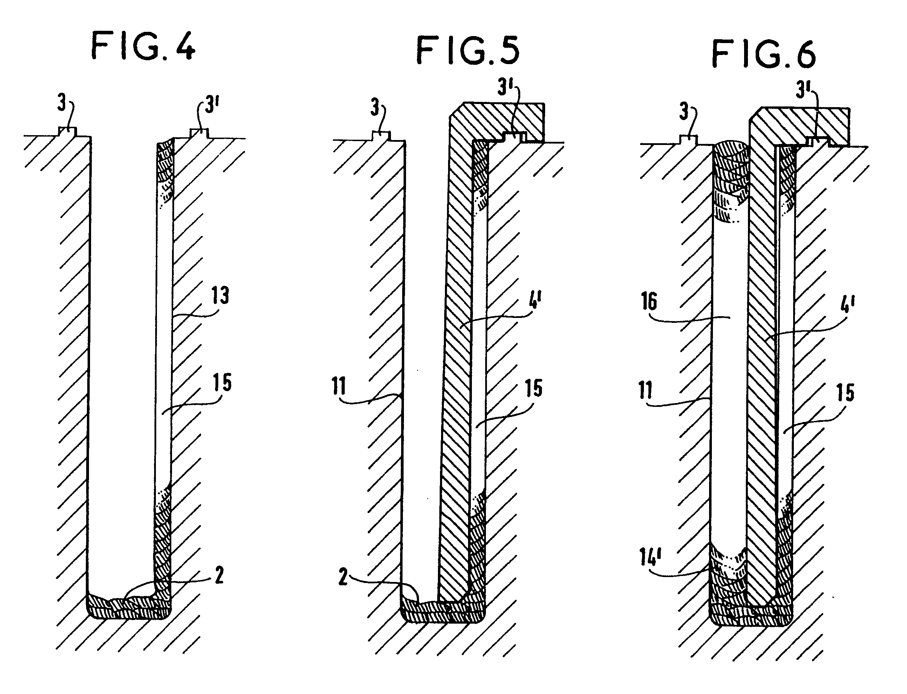

On usine ensuite la gorge 1 pour faire disparaître la plaque 4 et une partie de la soudure emplissant l'espace 12 en ne laissant qu'une couche de beurrage 15 sur la paroi 13 et les couches 2 du fond (voir figure 4). La couche de beurrage 15 est d'au moins 5 mm d'épaisseur.

On dispose ensuite contre la couche 15 une plaque 4' ayant les mêmes caractéristiques que la plaque 4, (voir figure 5).

On remplit par des couches 14' de soudure de même composition que la soudure des couches 14 l'espace 16 entre la paroi 11 et la plaque 4' (voir figure 6).

On usine ensuite la gorge 1 pour faire disparaître la plaque 4' et une partie de la soudure emplissant l'espace 16 pour ne garder qu'une couche de beurrage 17 contre la paroi 11 de même épaisseur que la couche 15 (voir figure 7). Ces couches 15 et 17 sont en acier faiblement allié avec teneur en carbone comprise entre 0,08% et 0,12% donc facilement soudables et avec faibles contraintes résiduelles.

Dans les zones du rotor voisines des parois 11 et 13 se trouvent des zones 18, 19 affectées thermiquement (ZAT) dont l'acier est principalement sous forme de martensité et de bainite ce qui les rend très sensibles aux containtes résiduelles.

Grâce à la présence des plaques 4 et 4' lors du remplissage des espaces 12 et 16 il n'y a que très peu de contraintes résiduelles de retrait dans les zones 18 et 19, ce qui réduit les risques de fissuration.

D'autre part pour diminuer fortement cette sensibilité aux contraintes résiduelles et adoucir les ZAT on procède à un traitement thermique en portant des zones à une température inférieure ou égale à la température de revenu utilisée lors de la fabrication du rotor.

Cette température (par exemple de l'ordre de 670°C) sera maintenue une vingtaine d'heures.

Ensuite, on remplit l'espace 20 entre les couches de beurrage 15 et 17 par des couches 21 de soudure sensiblement de même composition que les couches de beurrage 15 et 17. En réalité en raison de la dilution de l'acier de base dans les couches de beurrage celles-ci auront une teneur en acier et en métaux d'alliage de 15 à 20% supérieure à celle des couches 21. Les couches 15 et 17 étant en acier faiblement allié sont beaucoup moins sensibles à la fissuration que le métal de base initial.

Il s'ensuit que le remplissage final crée de nouvelles zones affectées thermiquement dans des matériaux moins sensibles à la fissuration à froid que le métal de base du rotor et acceptant donc des contraintes de retrait plus élevées.

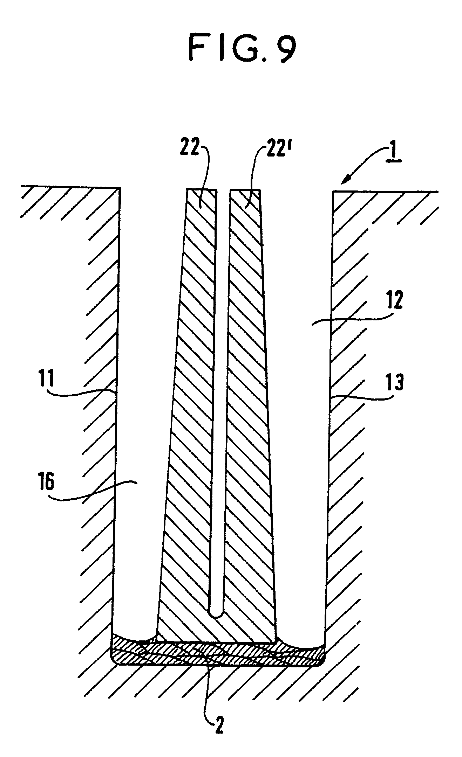

Lorsque la gorge 1 est large on peut au lieu d'utiliser deux plaques 4 et 4' disposer une double plaque 22, 22' que l'on vient souder par exemple à l'arc sur les couches 2 déposées au fond de la gorge 1 (voir figure 9).

L'espace 12 entre la paroi 13 et la plaque 22' et l'espace 16 entre la plaque 22 et la paroi 11 sont remplis de soudure comme dans le procédé décrit aux figures 1 à 7. On peut déposer les couches simultanément dans les deux espaces ou faire partiellement un espace avant de passer à l'autre et ainsi de suite; on peut également remplir un espace après l'autre.

Les faces des plaques 22 et 22' définissant les espaces 12 et 16 avec les parois 13 et 11 s'écoulent des parois 13 et 11 associées, du fond de la gorge vers le haut. Elles deviennent parallèles à ces parois lors du remplissage des espaces 12 et 16.

On usine ensuite la gorge pour faire disparaître la double plaque plaque 22, 22' et obtenir en une seule étape les deux couches de beurrage qui définissent un espace que l'on remplira ensuite comme indiqué à la figure 7.

Le traitement thermique peut se faire avant ou après avoir fait disparaître la double plaque 22 et 22'.

Cette variante du procédé présente l'avantage de ne nécessiter qu'une seule étape d'usinage pour éliminer les plaques 22 et 22'.

## Revendications

1. Procédé de soudage d'une gorge (1) usinée dans une pièce massive en acier allié caractérisé en ce qu'on effectue des passes de fond (2) puis on beurre chaque paroi (11, 13) de la gorge (1) avec des produits d'apport en acier faiblement allié, on traite thermiquement de façon à faire disparaître les contraintes dans les zones (18, 19) de la pièce voisine des parois (11, 13) de la gorge, on remplit l'espace libre (20) entre les deux beurrages (15, 17) par des produits d'apport en acier faiblement allié, ladite opération de beurrage de paroi (11, 13) étant réalisée en disposant dans la gorge (1) une plaque (4, 4', 22, 22') en acier au carbone à une certaine distance de ladite paroi (13, 11), en remplissant l'espace (12, 16) entre la plaque (4, 4', 22, 22') et la paroi (11, 13) par des couches (14, 14') en acier faiblement allié avec teneur en carbone comprise entre 0,08% et 0,12% et en éliminant la plaque d'acier (4, 4', 22, 22') et éventuellement une partie du remplissage pour ne laisser qu'une couche (15, 17) sur la paroi (13, 11).

2. Procédé de soudage selon la revendication 1, caractérisé en ce que les passes de fond sont effectuées en utilisant comme métal d'apport un acier non allié à bas carbone.

3. Procédé de soudage selon l'une des revendications 1 ou 2, caractérisé en ce que la plaque en acier (4, 4', 22, 22') au carbone est bloquée au fond de la gorge (1) et est disposée avec sa face en regard de la paroi à beurrer (13, 11) allant en s'écartant légèrement de cette paroi (13, 11) du fond de la gorge (1) vers l'ouverture (10).

4. Procédé de soudage selon la revendication 3, caractérisé en ce que l'angle d'écartement est choisi de façon que, lorsque l'espace (12, 16) entre la plaque (4, 4', 22, 22') et la paroi (13, 11) est rempli, la face de la plaque (4, 4', 22, 22') en regard de la paroi (13, 11) soit parallèle à ladite paroi (13, 11).

5. Procédé de soudage selon la revendication 4, caractérisé en ce que la plaque (4, 4') vient en butée lorsque la face de la plaque (4, 4') en regard de la paroi à beurrer (13, 11) devient parallèle à cette paroi (13, 11).

6. Procédé selon la revendication 5, caractérisé en ce que la plaque (4, 4') vient en butée lorsque l'espace (12, 16) entre la plaque (4, 4') et paroi (13, 11) est rempli à moitié.

7. Procédé selon l'une des revendications précédentes caractérisé en ce que lors du remplissage de l'espace entre la plaque (4, 4') et la paroi à beurrer (13, 11) la partie inférieure de la plaque (4, 4') reste au contact de l'autre paroi (11, 13) munie éventuellement de sa couche de beurrage (15).

8. Procédé selon l'une des revendications 1 à 4, caractérisé en ce que on dispose une double plaque (22, 22') dans la partie médiane de la gorge (1) définissant avec les deux parois (11, 13) deux espaces à remplir (16, 12).

9. Utilisation du procédé selon l'une des revendications précédentes pour réparer un rotor présentant un défaut dans lequel on a usiné une gorge circulaire à l'endroit du défaut et dans lequel les plaques (4, 4', 22, 22') sont constituées de demi-secteurs circulaires (5, 5').

## Patentansprüche

1. Verfahren zum Verschweißen einer in ein massives Bauteil aus legiertem Stahl eingeschnittenen Nut (1), dadurch gekennzeichnet, daß man am Boden (2) und dann an jeder Wand (11, 13) der Nut (1) Auftragsmaterial aus schwach legiertem Stahl aufträgt, daß dann eine Wärmebehandlung zur Beseitigung der Spannungen in den Zonen (18, 19) des Bauteils in der Umgebung der Wände (11, 13) der Nut erfolgt, daß dann der freie Raum (20) zwischen den beiden Wandbelägen (15, 17) mit Auftragsmaterial aus schwach legiertem Stahl aufgefüllt wird, wobei die Operation des Belegens der Wände (11, 13) durch Anordnen einer Platte (4, 4', 22, 22') aus kohlenstoffhaltigem Stahl in der Nut (1) unter Belassung eines gewissen Abstands zur Wand (13, 11), durch Füllen des Raums (12, 16) zwischen der Platte (4, 4', 22, 22') und der Wand (11, 13) mit Schichten (14, 14') aus schwach legiertem Stahl mit einem Kohlenstoffgehalt zwischen 0,08 und 0,12% und durch Entfernen der Stahlplatte (4, 45', 22, 22') sowie möglicherweise eines Teils der Füllung erfolgt, so daß nur eine Schicht (15, 17) an der Wand (13, 11) übrigbleibt.

2. Schweißverfahren nach Anspruch 1, dadurch gekennzeichnet, daß die Schweißlagen am Boden der Nut unter Verwendung eines nichtlegierten Stahls mit wenig Kohlenstoff als Auftragsmaterial aufgebracht werden.

3. Schweißverfahren nach Anspruch 1 oder 2, dadurch gekennzeichnet, daß die kohlenstoffhaltige Stahlplatte (4, 4', 22, 22') am Boden der Nut (1) blockiert wird und mit ihrer der zu belegenden Wand (13, 11) gegenüberstehenden Seite vom Boden der Nut (1) zur Öffnung (10) hin einen leicht zunehmenden Abstand von der Wand (13, 11) aufweist.

4. Schweißverfahren nach Anspruch 3, dadurch gekennzeichnet, daß der Abstandswinkel so gewählt ist, daß, wenn der Raum (12, 16) zwischen der Platte (4, 4', 22, 22') und der Wand (13, 11) gefüllt ist, die Seite der Platte (4, 4', 22, 22') gegenüber dieser Wand (13, 11) parallel zu dieser Wand (13, 11) liegt.

5. Schweißverfahren nach Anspruch 4, dadurch gekennzeichnet, daß die Platte (4, 4') an einen Anschlag stößt, wenn die Seite der Platte (4, 4') gegenüber der zu belegenden Wand (13, 11) in die Parallellage zu dieser Wand gelangt.

6. Verfahren nach Anspruch 5, dadurch gekennzeichnet, daß die Platte (4, 4') an den Anschlag stößt, wenn der Raum (12, 16) zwischen der Platte (4, 4') und der Wand (13, 11) halb gefüllt ist.

7. Verfahren nach einem. der vorhergehenden Ansprüche, dadurch gekennzeichnet, daß während des Füllens des Raums zwischen der Platte und der zu belegenden Wand (13, 11) der untere Teil der Platte (4, 4') in Berührung mit der anderen Wand (11, 13) bleibt, die gegebenenfalls mit ihrer Belagsschicht (15) versehen ist.

8. Verfahren nach einem der Ansprüche 1 bis 4, dadurch gekennzeichnet, daß man eine Doppelplatte (22, 22') im Mittelabschnitt der Nut (1) anordnet, wobei die Platte mit ihren beiden Wänden (11, 13) zwei Füllräume (16, 12) definiert.

9. Verwendung des Verfahrens nach einem der vorhergehenden Ansprüche zum Reparieren eines Risses in einem Rotor, in den man an der Stelle des Risses eine ringförmige Nut eingeschnitten hat, wobei die Platten (4, 4', 22, 22') aus Halbkreissektoren (5, 5') bestehen.

## Claims

1. A method of fill-welding a groove (1) machined in a solid steel part, characterized in that bottom passes (2) are performed and then to each wall (11, 13) of the groove (1) is applied a low alloy steel deposit material,

heat treatment is performed so as to eliminate the stresses in the zones (18, 19) of the part adjacent to the walls (11, 13) of the groove,

the empty space (20) between the two facing layers (15, 17) is filled with low alloy steel deposit material, said operation of depositing layers on the wall (11, 13) being performed by placing a carbon steel plate (4, 4', 22, 22') in the groove (1) at a certain distance from said wall (13, 11), by filling the space (12, 16) between the plate (4, 4', 22, 22') and the wall (11, 13) with layers (14, 14') of low alloy steel having a carbon content lying in the range 0,08% and 0,12%, and by eliminating the steel plate (4, 4', 22, 22') and optionally a portion of the fill so as to leave only a layer (15, 17) on the wall (13, 11).

2. A welding method according to claim 1, characterized in that the bottom passes are performed using a non-alloyed low carbon steel as the deposit metal.

3. A welding method according to claim 1 or 2, characterized in that the carbon steel plate (4, 4', 22, 22') is blocked on the bottom of the groove (1), and is disposed so that its face opposite the wall (13, 11) to which the layer should be applied slopes slightly away from said wall (13, 11) starting from the bottom of the groove (1) up to its mouth (10).

4. A welding method according to claim 3, characterized in that the slope angle is selected such that when the space (12, 16) between the plate (4, 4', 22, 22') and the wall (13, 11) is filled, the face of the plate (4, 4', 22, 22') opposite the wall (13, 11) is parallel to said wall (13, 11).

5. A welding method according to claim 4, characterized in that the plate (4, 4') comes into abutment when the face of the plate (4, 4') opposite the wall (13, 11) to which the layer should be applied becomes parallel to said wall (13, 11).

6. A method according to claim 5, characterized in that the plate (4, 4') comes into abutment when the space (12, 16) between the plate (4, 4') and the wall (13, 11) is half filled.

7. A method according to any preceding claim, characterized in that while the space between the plate (4, 4') and the wall (13, 11) is being filled, the bottom portion of the plate (4, 4') remains in contact with the other wall (11, 13) which may optionally be covered by a layer (15).

8. A method according to any one of claims 1 to 4, characterized in that a double plate (22, 22') is disposed on the middle portion of the groove (1), thereby defining, in conjunction with the two walls (11, 13), two spaces to be filled (16, 12).

9. Utilization of the method according to any preceding claim for repairing a rotor having a defect in which a circular groove is machined at the location of the defect and in which the plates (4, 4', 22, 22') are constituted by circular half-sectors (5, 5').

FIG.1

FIG.2

FIG.3

FIG.4

FIG.5

FIG.6

# FIG.7

# FIG.8

EP 0 304 654 B1

# FIG. 9